Europäisches Patentamt

(19) European Patent Office

Office européen des brevets

(11) Numéro de publication : **0 327 442 B1**

(12) # FASCICULE DE BREVET EUROPEEN

(45) Date de publication du fascicule du brevet :
06.11.91 Bulletin 91/45

(51) Int. Cl.⁵ : **F28F 9/06, F16L 37/08**

(21) Numéro de dépôt : **89400261.7**

(22) Date de dépôt : **31.01.89**

(54) **Dispositif d'assemblage pour un ensemble échangeur de chaleur/raccord tubulaire.**

(30) Priorité : **02.02.88 FR 8801188**

(43) Date de publication de la demande :
**09.08.89 Bulletin 89/32**

(45) Mention de la délivrance du brevet :
**06.11.91 Bulletin 91/45**

(84) Etats contractants désignés :
**BE DE ES GB IT LU NL SE**

(56) Documents cités :
**FR-A- 1 455 850**
**FR-A- 2 249 299**

(73) Titulaire : **HUTCHINSON**
**2 rue Balzac**
**F-75008 Paris (FR)**

(72) Inventeur : **Briet, Gilles**
**Le Petit Vallot Neuvy Grandchamp**
**F-71130 Gueugnon (FR)**

(74) Mandataire : **Ores, Irène et al**
**CABINET ORES 6, Avenue de Messine**
**F-75008 Paris (FR)**

## Description

La présente invention, à laquelle a participé la Société VALEO, est relative à un dispositif d'assemblage pour un ensemble échangeur de chaleur/raccord tubulaire, dans lequel le raccord tubulaire débouche dans une boîte à eau de l'échangeur et est fixé à la boîte à eau par une liaison élastique facilement démontable selon le préambule de la revendication 1.

Dans les dispositifs antérieurs, le raccord tubulaire (qui est relié à un tuyau souple, appelé durit) s'emboîte de différentes manières dans une tubulure faisant saillie de la boîte à eau de l'échangeur.

Or, la présence de cette tubulure de raccordement saillante complique l'opération de sertissage du collecteur reliant la boîte à eau au système de faisceaux de l'échangeur et augmente les dimensions d'encombrement de l'ensemble, ce qui a des conséquences gênantes pour les manipulations de montage sur les véhicules automobiles.

Il est vrai que la Demande de Brevet FR-A-2249299 divulgue déjà un dispositif d'assemblage du type précité, dans lequel la boîte à eau ne comporte pas de tubulure saillante et l'assemblage est facilité par la présence de surfaces de glissement radiales inclinées faisant moyens de guidage de cet assemblage stabilisé par des moyens d'emprisonnement élastique ; toutefois, la configuration adoptée pour les moyens de guidage et les moyens d'emprisonnement élastique précités ne permettent pas d'assurer la rapidité d'intervention aussi lors du désassemblage.

La présente invention s'est donc donné pour but d'éliminer cet inconvénient et vise à pourvoir à un dispositif d'assemblage entre échangeur de chaleur/raccord tubulaire dans lequel la liaison démontable adoptée est une solution améliorée compatible avec l'absence de tubulure saillante dans la boîte à eau.

La présente invention a pour objet un dispositif d'assemblage pour un ensemble échangeur de chaleur/raccord tubulaire, dans lequel le raccord tubulaire, débouchant dans une ouverture d'une boîte à eau de l'échangeur, est solidarisé, d'une part, à un tuyau souple par une liaison fixe et, d'autre part, à la boîte à eau par une liaison élastique facilement démontable, l'étanchéité entre le raccord tubulaire et la boîte à eau étant assurée par une bague élastomère comprimée radialement entre eux, un premier moyen de guidage axialement saillant étant solidaire du raccord tubulaire, alors qu'un deuxième moyen de guidage est solidaire de la surface intérieure de la boîte à eau et présente une configuration permettant sa coopération avec le premier moyen de guidage, caractérisé en ce que :

— ledit premier moyen de guidage est constitué par un ongle saillant orienté axialement, tandis que ledit deuxième moyen de guidage est constitué par une cloison sur laquelle est destinée à glisser l'ongle saillant, ladite cloison faisant saillie d'une première paroi de la boîte à eau opposée à l'ouverture précitée et délimitant, avec une deuxième paroi de cette boîte, sensiblement parallèle à la cloison, un logement dans lequel pénètre et est emprisonné ledit ongle de guidage, lorsque le raccord tubulaire est assemblé avec la boîte à eau ;

— l'ongle et la cloison de guidage présentent, en section tranversale, un profil défini par un arc de circonférence ;

— la liaison démontable entre le raccord tubulaire et la boîte à eau est constituée par un dispositif de verrouillage comportant au moins une patte orientée axialement et élastique radialement, laquelle patte est pourvue à son extrémité libre d'une dent d'encliquetage destinée à coopérer, pour le verrouillage, avec un moyen d'arrêt.

Selon un premier mode de réalisation, le dispositif de verrouillage comporte deux pattes disposées à l'extérieur du dispositif d'assemblage et réalisées en une seule pièce avec le raccord tubulaire ou avec la boîte à eau, la butée avec laquelle coopère chaque dent d'encliquetage étant disposée sur la boîte à eau ou sur le raccord tubulaire, respectivement.

Selon une variante avantageuse de ce mode de réalisation, les deux pattes externes sont des pattes métalliques rapportées ou surmoulées avec le raccord tubulaire ou la boîte à eau.

Conformément à l'invention, dans chaque cas la butée est réalisée avantageusement sous forme d'une oreille tubulaire dans laquelle s'enfile la patte correspondante et contre une extrémité distale de laquelle vient en butée la dent d'encliquetage.

Selon un deuxième mode de réalisation, le dispositif de verrouillage comporte deux pattes portées par l'ongle de guidage du raccord tubulaire et destinées à s'encliqueter à l'intérieur de la boîte à eau avec deux butées radiales ménagées dans la paroi de celle-ci par l'intermédiaire de leurs dents.

Selon une disposition préférée de ce mode de réalisation, les deux pattes internes sont réalisées en une seule pièce avec l'ongle de guidage.

Selon une variante avantageuse de cette disposition, les deux pattes internes sont des pattes métalliques rapportées portées par une demi-bague métallique mince disposée autour de l'ongle de guidage et logée dans une gorge de celle-ci.

L'invention sera mieux comprise à l'aide du complément de description qui va suivre, qui se réfère aux dessins annexés dans lesquels :

— la figure 1 est une vue de dessus, partiellement en coupe axiale, montrant un premier mode de réalisation du dispositif d'assemblage selon l'invention,

— la figure 2 est une vue en élévation latérale, avec arrachements, illustrant une exécution possible du dispositif de verrouillage,

— la figure 3 est une vue en coupe, suivant III, de l'assemblage de la figure 2,

— la figure 4 est une variante de réalisation du dispositif de verrouillage par rapport à la solution des figures 2 et 3,

— la figure 5 est une vue en coupe, suivant V, de la solution illustrée à la figure 4,

— la figure 6 est une vue en élévation latérale montrant en détail une des pattes rapportées métalliques surmoulées avec le raccord tubulaire de la figure 4,

— la figure 7 est une autre variante de réalisation par rapport au dispositif de verrouillage de la figure 4,

— la figure 8 est une vue de dessus, partiellement en section, d'un deuxième mode de réalisation du dispositif d'assemblage conforme à l'invention montrant les deux éléments de l'assemblage séparés,

— la figure 9 est une vue en coupe, suivant IX, de l'assemblage illustré à la figure 8, qui a été effectuée après avoir emboîté l'un dans l'autre les éléments composants,

— la figure 10 est une vue en perspective montrant en détail la configuration du dispositif de verrouillage utilisé dans l'assemblage des figures 8 et 9,

— la figure 11 est une vue, suivant XI, de la boîte à eau illustrée à la figure 8,

— les figures 12 à 14 montrent l'application du principe d'assemblage par ongle et cloison de guidage à la réalisation d'un raccord double lorsque les ouvertures d'entrée et de sortie d'un échangeur sont du même côté d'une boîte à eau et rapprochées ; en particulier :

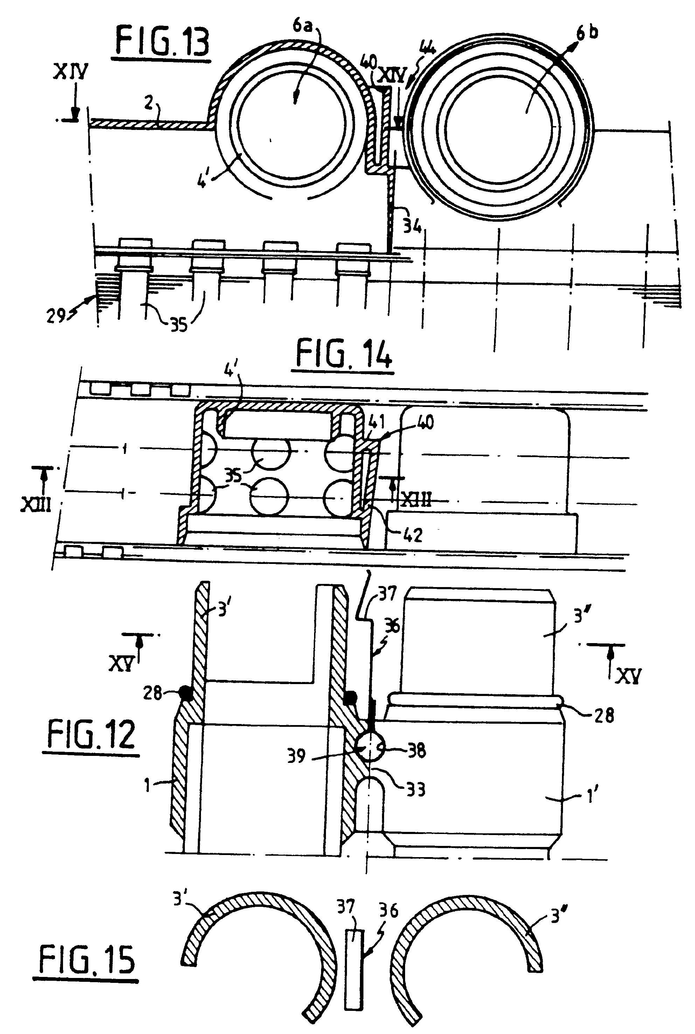

• la figure 12 est une vue latérale avec section axiale partielle du raccord double fixé aux extrémités de deux tuyaux souples,

• la figure 13 est une vue en élévation frontale avec section partielle, suivant XIII, de la boîte à eau montrant les ouvertures d'entrée et de sortie de l'échangeur de chaleur,

• la figure 14 est une vue de dessus avec section partielle, suivant XIV, de la boîte à eau illustrée à la figure 13,

— la figure 15 est une vue en section, suivant XV, montrant la configuration des ongles de guidage de chaque composant du raccord double illustré à la figure 12.

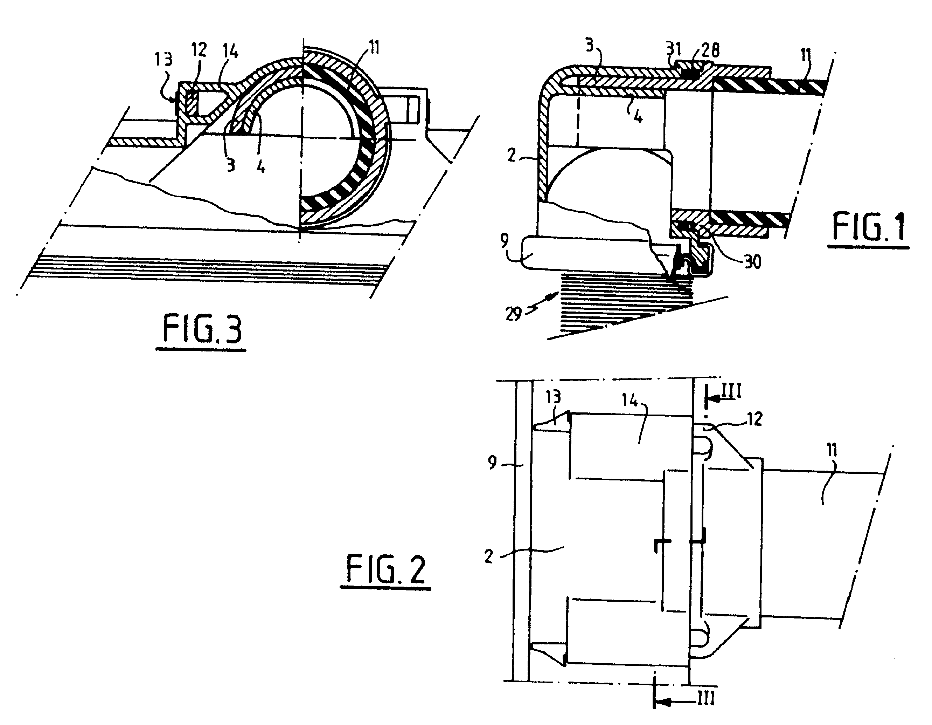

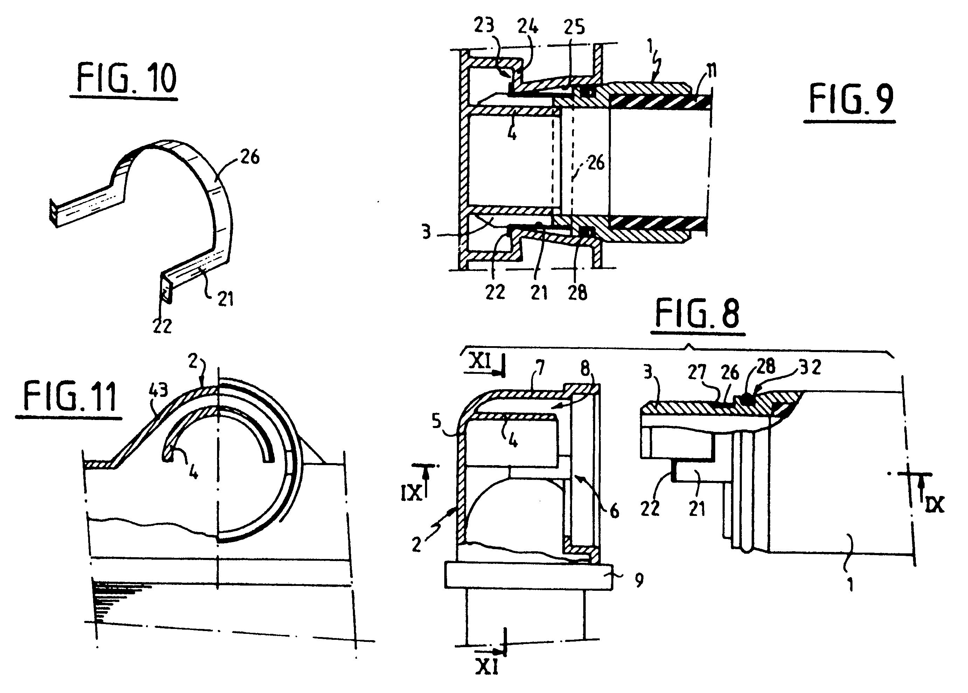

Les deux dispositifs d'assemblage illustrés aux figures 1 et 8 ont en commun la manière dans laquelle le raccord tubulaire 1 s'emboîte avec la boîte à eau 2, l'un et l'autre réalisés en matière plastique.

Dans chaque cas on peut remarquer la présence d'un "ongle" de guidage 3 faisant saillie du raccord 1, ainsi que d'une cloison de guidage 4 faisant saillie de la paroi 5 de la boîte à eau 2 qui est opposée à l'ouverture 6 ménagée dans cette boîte.

La cloison 4 délimite avec la paroi (ou voûte) 7, sensiblement parallèle à celle-ci, un logement 8 pour l'ongle de guidage 3.

En faisant plus particulièrement référence à la figure 1 on voit que cet ongle de guidage 3 est enfilé pratiquement complètement dans le logement 8.

Il est facile de comprendre que la pénétration de l'ongle 3 dans son logement à l'intérieur de la boîte à eau 2 permet d'éliminer la tubulure de raccordement qui, dans les solutions de l'Art antérieur, fait saillie de la boîte à eau pour assurer l'assemblage avec le raccord tubulaire. L'absence d'une telle tubulure saillante facilite le sertissage du collecteur 9 sur la boîte à eau 2 : l'assemblage par sertissage entre collecteur et boîte à eau est visible en section à la figure 1 (où on a illustré le faisceau 29 de l'échangeur de chaleur) et peut être effectué aisément préalablement à l'assemblage avec le raccord tubulaire 1. La figure 8, dans laquelle le raccord est séparé de la boîte à eau, permet d'apprécier encore mieux l'absence de toute partie saillante de celle-ci.

La figure 3 montre une configuration préférée de l'ongle de guidage 3 et de la cloison de guidage correspondante 4, qui sont définies par des demi-circonférences, bien qu'en général une configuration en arc de circonférence quelconque soit possible, pourvu qu'existe un passage pour l'établissement d'un débit d'écoulement suffisant du fluide, de la boîte à eau au tuyau souple 11 ou vice versa.

Le verrouillage entre la boîte à eau 2 et le raccord tubulaire 1 est illustré à la figure 2 où sont représentées deux pattes élastiques 12 venues de moulage avec le raccord et orientées axialement et élastiques dans la direction radiale. Ces pattes sont pourvues à leurs extrémités libres de dents d'encliquetage 13. Chaque dent vient en appui contre l'extrémité distale d'une oreille tubulaire 14 dans laquelle s'enfile la patte correspondante.

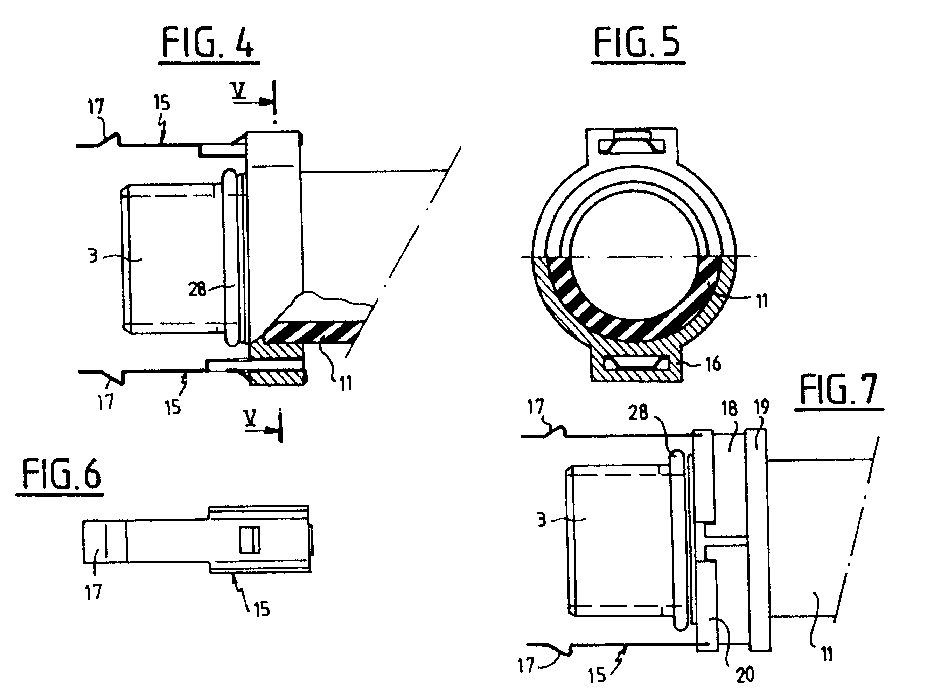

De façon alternative, les pattes élastiques de verrouillage peuvent être des pattes métalliques rapportées, telles que les pattes 15 des figures 4 et 6, où elles sont représentées comme rapportées par encliquetage dans des oreilles de fixation 16, bien qu'elles puissent être surmoulées avec le raccord tubulaire.

La figure 6 montre mieux la configuration des pattes rapportées 15 dont les dents 17 viennent s'encliqueter contre l'extrémité distale des oreilles de verrouillage tubulaires 14 précitées.

La figure 7 montre une variante de réalisation des pattes rapportées métalliques 15, qui sont représentées comme faisant saillie à partir d'une bague élastique métallique fendue 18, qui peut être logée dans une gorge ménagée dans une collerette 19 venue de moulage avec le raccord tubulaire 1, ou qui peut être surmoulée avec cette collerette 19. L'élément de renfort 20 s'oppose à l'écartement des lèvres de la bague fendue 18 suite aux manoeuvres de déverrouillage effectuées par rapprochement radial des pattes élastiques 15.

Aux figures 8 à 10 est représenté un autre mode de réalisation du dispositif d'assemblage conforme à l'invention, dans lequel on a adopté une solution différente pour le dispositif de verrouillage. Celui-ci comporte également dans ce cas deux pattes axiales qui sont élastiques dans la direction radiale, mais au lieu de réaliser un verrouillage à l'extérieur, elles permettent avantageusement de le réaliser à l'intérieur de la boîte à eau.

A cet effet, les pattes élastiques, 21, sont portées par l'ongle de guidage 3 et leurs dents d'encliquetage 22 viennent en appui contre deux butées radiales 23 ménagées dans la paroi interne de la boîte à eau 2 (cf. la figure 9).

Ces butées 23 présentent une surface de retenue 24 sensiblement radiale et une surface d'approche axiale 25 inclinée vers l'axe de l'ouverture de la boîte à eau.

Un mode de réalisation non limitatif des pattes 21 à accrochage interne, et qui peut être mieux apprécié à la figure 10, est constitué par des pattes rapportées solidaires d'une demi-bague métallique mince 26 disposée autour de l'ongle de guidage 3 sur laquelle elle est logée dans une gorge 27 (cf. la figure 8).

Toutefois, les pattes à accrochage interne peuvent être réalisées en une seule pièce avec l'ongle de guidage du raccord tubulaire.

La figure 11 montre que le raccord entre la paroi 7 de la boîte à eau et la paroi qui se trouve de part et d'autre de l'ouverture 6 de cette boîte est défini par un segment en pente 43 dirigé tangentiellement (au lieu d'être concentrique avec la cloison de guidage 4) vers l'extérieur, de manière à permettre de désengager les dents 22 des pattes de verrouillage lorsqu'on tourne le raccord tubulaire 1 autour de son axe.

Il y a lieu d'observer le positionnement de la bague d'étanchéité 28 dans les deux modes de réalisation illustrés aux figures 1 et 8.

A la figure 1, la bague d'étanchéité élastomère est simplement disposée sur le prolongement de l'ongle de guidage 3 contre un épaulement rentrant 30 à partir duquel fait saillie cet ongle.

La bague élastomère 28 est disposée entre l'épaulement rentrant 30 du raccord 1 et un épaulement saillant 31 de l'ouverture de la boîte à eau et est comprimée radialement entre celle-ci et le raccord.

En ce qui concerne la figure 8, du fait de la présence de la gorge 27 de logement de la bague métallique 26 portant les pattes élastiques 21, la bague élastomère 28 est logée dans une gorge 32 ménagée à proximité de la gorge 27 précitée.

La solution avec pattes de verrouillage externes (représentée aux figures 1 à 7) — autorisant notamment le désassemblage du raccord tubulaire de la boîte à eau par un simple mouvement d'éloignement axial, contrairement à la solution avec pattes de verrouillage "internes", correspondant aux figures 8 à 11, pour laquelle le déverrouillage se fait par un mouvement de rotation du raccord — permet d'étendre à des raccords doubles la solution de principe qui est à la base de l'invention et qui consiste dans la coopération entre un ongle et une cloison de guidage.

A cet effet il y a lieu de préciser qu'un raccord double est envisageable dans le cas où l'entrée et la sortie d'une boîte à eau d'un échangeur de chaleur se situent sur la même boîte à eau (à savoir, du même côté de l'échangeur) parce qu'il est alors possible de rapprocher les ouvertures d'entrée et de sortie. Bien entendu, une cloison de séparation entre l'entrée et la sortie est ménagée dans la boîte à eau lorsqu'elles sont situées du même côté de l'échangeur, pour permettre la circulation efficace du fluide dans l'échangeur.

Dans ce cas, les raccord tubulaires associés à l'entrée et à la sortie de la boîte à eau peuvent être réalisés en une seule pièce (raccord double monobloc), du fait de leur rapprochement, comme illustré à la figure 12, qui montre, en section, un raccord tubulaire 1 jumelé avec un autre raccord 1', vu de l'extérieur, par un pont de liaison 33 venu de moulage.

Les figures 13 et 14 montrent la boîte à eau 2 avec les ouvertures d'entrée et de sortie 6a et 6b rapprochées et séparées par une cloison 34 (cf. la figure 13). Dans ces figures on peut aussi remarquer la présence des tubes 35 de l'échangeur ainsi que du faisceau 29 précités.

La hauteur de la cloison 34 est inférieur à la hauteur de la boîte à eau de manière à permettre le passage, entre les deux raccords 1 et 1', d'une patte de verrouillage élastique 36 pourvue à son extrémité libre d'une dent d'encliquetage 37,ce qui définit une dépression 44 de la paroi de la boîte à eau entre les deux raccords composants 1 et 1'.

L'extrémité fixe 38 de la patte 36 est logée dans un évidement 39 ménagé dans le pont de liaison 33 entre les deux raccords jumelés 1 et 1'.

La dent d'encliquetage 37 est destinée à venir en appui sur une butée 40 lorsque le raccord double 1-1' est assemblé avec la bote à eau 2, laquelle butée vient de moulage avec un des deux raccords (notamment avec le raccord 1 dans les figures 13 et 14) et est disposée dans la dépression 44 précitée.

La butée 40 présente une surface de retenue sensiblement perpendiculaire au raccord 1 et une surface d'approche inclinée dans le sens contraire à l'accrochage de la dent 37.

La configuration des ongles de guidage est illustrée à la figure 12, et en particulier à la figure 15, qui est une coupe suivant XV de la figure 12. L'arc de circonférence définissant les ongles de guidage 3' et 3" s'étend dans ce cas sur un angle relativement important, à la différence des figures 3 et 8, étant donné que chaque ongle de guidage du raccord double peut se prolonger vers la cloison 34, sans que cela puisse gêner la circulation du fluide dans la boîte à eau.

La cloison de guidage coopérant avec l'ongle de guidage de chaque raccord 1 et 1' à une hauteur qui est moins étendue axialement par rapport aux figures 1 et 8, pour éviter de masquer les tubes 35 de l'échangeur (cf. la figure 14). Du fait de cette réduction d'extension, la cloison peut être réalisée sous la forme d'une simple nervure annulaire 4' sur laquelle vient glisser, lors de l'assemblage du raccord double avec la boîte à eau, l'extrémité de l'ongle de guidage correspondant 3'. La fixation peut être obtenue par emprisonnement de l'extrémité du tuyau entre le raccord et un surmoulage en matière plastique ou par sertissage d'une bague métallique appliquée autour du tuyau ou encore par simple collage ou par tout autre moyen équivalent. En outre, les moyens de guidage peuvent aussi être constitués par un doigt axial faisant saillie du racccord et par un logement axial faisant saillie radialement de la paroi de la boîte à eau vers l'intérieur de celle-ci, ledit doigt étant destiné à s'enfiler dans ce logement.

## Revendications

1. Dispositif d'assemblage pour un ensemble échangeur de chaleur/raccord tubulaire, dans lequel le raccord tubulaire (1), débouchant dans une ouverture (6) d'une boîte à eau (2) de l'échangeur, est solidarisé, d'une part, à un tuyau souple (11) par une liaison fixe et, d'autre part, à la boîte à eau (2) par une liaison élastique facilement démontable, l'étanchéité entre le raccord tubulaire (1) et la boîte à eau (2) étant assurée par une bague élastomère (28) comprimée radialement entre eux, un premier moyen de guidage axialement saillant (3 ; 3', 3") étant solidaire du raccord tubulaire (1), alors qu'un deuxième moyen de guidage (4 ; 4') est solidaire de la surface intérieure de la boîte à eau (2) et présente une configuration permettant sa coopération avec le premier moyen de guidage, caractérisé en ce que :
— ledit premier moyen de guidage est constitué par un ongle saillant (3) orienté axialement, tandis que ledit deuxième moyen de guidage est constitué par une cloison (4) sur laquelle est destinée à glisser l'ongle saillant (3), ladite cloison (4) faisant saillie d'une première paroi (5) de la boîte à eau (2) opposée à l'ouverture précitée (6) et délimitant, avec une deuxième paroi (7) de cette boîte, sensiblement parallèle à la cloison (4), un logement (8) dans lequel pénètre et est emprisonné ledit ongle de guidage (3), lorsque le raccord tubulaire est assemblé avec la boîte à eau (2) ;
— l'ongle et la cloison de guidage présentent, en section tranversale, un profil défini par un arc de circonférence ;
— la liaison démontable entre le raccord tubulaire (1) et la boîte à eau (2) est constituée par un dispositif de verrouillage comportant au moins une patte (12, 21, 15) orientée axialement et élastique radialement, laquelle patte est pourvue à son extrémité libre d'une dent d'encliquetage (13, 22, 17) destinée à coopérer, pour le verrouillage, avec un moyen d'arrêt (ou butée, 14, 23).

2. Dispositif selon la revendication 1, caractérisé en ce que le dispositif de verrouillage comporte deux pattes (12) disposées à l'extérieur du dispositif d'assemblage et réalisées en une seule pièce avec le raccord tubulaire (1) ou avec la boîte à eau (2), la butée (14) avec laquelle coopère chaque dent d'encliquetage (13) étant disposée sur la boîte à eau (2) ou sur le raccord tubulaire (1), respectivement.

3. Dispositif selon la revendication 1, caractérisé en ce que les deux pattes externes sont des pattes métalliques rapportées (15) ou surmoulées avec le raccord tubulaire (1) ou la boîte à eau (2).

4. Dispositif selon l'une quelconque des revendications 2 ou 3, caractérisé en ce que la butée est réalisée avantageusement sous forme d'une oreille tubulaire (14) dans laquelle s'enfile la patte correspondante (12, 15) et contre une extrémité distale de laquelle vient en butée la dent d'encliquetage (13, 17).

5. Dispositif selon la revendication 1, caractérisé en ce que le dispositif de verrouillage comporte deux pattes (21) internes portées par l'ongle de guidage (3) du raccord tubulaire (1) et destinées à s'encliqueter à l'intérieur de la boîte à eau (2) avec deux butées radiales (23) ménagées dans la paroi de celle-ci par l'intermédiaire de leurs dents (22).

6. Dispositif selon la revendication 5, caractérisé en ce que les deux pattes internes sont réalisées en une seule pièce avec l'ongle de guidage (3), et en ce que des encoches axiales d'entrée et de sortie sont ménagées sur la surface interne de l'ouverture de la boîte à eau.

7. Dispositif selon la revendication 5, caractérisé en ce que les deux pattes internes sont des pattes métalliques rapportées (21) portées par une demi-bague métallique mince (26) disposée autour de l'ongle de guidage (3) et logée dans une gorge (27) de celle-ci.

8. Dispositif selon la revendication 7, caractérisé en ce que ladite deuxième paroi (7) de la boîte à eau (2), délimitant en coopération avec la cloison de guidage (4) le logement (8) pour ledit ongle de guidage (3), est raccordée aux parties adjacentes, qui se trouvent de part et d'autre par rapport à l'ouverture (6) de la boîte à eau (2), par des segments de paroi (43) inclinés vers l'extérieur.

9. Dispositif d'assemblage pour un ensemble échangeur de chaleur/raccords tubulaires, dans lequel un premier et un deuxième raccords tubulaires (1, 1') débouchent dans une première et une deuxième ouvertures (entrée, sortie 6a, 6b) d'une boîte à eau (2) de l'échangeur comportant une cloison (34) de séparation entre ces deux ouvertures, chaque raccord étant solidarisé, d'une part, à un tuyau souple (11) par une liaison fixe et, d'autre part, à la boîte à eau par une liaison élastique facilement démontable, caractérisé en ce que les deux ouvertures (6a et 6b) sont rapprochées, tout en étant disposées de part et d'autre de la cloison de séparation, en ce que chaque raccord tubulaire est réalisé selon la revendication 1, et en ce que les deux raccords tubulaires (1, 1') sont reliés par un pont de liaison (33) venu de moulage, les deux raccords ainsi jumelés définissant un raccord double monobloc.

10. Dispositif selon la revendication 9, caractérisé en ce que la cloison de séparation (34) des deux ouvertures (6a et 6b) de la boîte à eau (2) présente une hauteur inférieure à la profondeur de la boîte à eau, ce qui définit une dépression (44) entre les deux ouvertures (6a et 6b) correspondant aux deux raccords tubulaires (1, 1'), et en ce que le dispositif de verrouillage comporte une patte unique métallique rapportée (36), dont l'extrémité fixe (38) est logée dans un évidement (39) du pont de liaison (33), tandis que la dent d'encliquetage (37), dont est pourvue son extrémité libre, lorsque le raccord double est assemblé avec la boîte à eau, vient en appui contre une butée (40) ménagée sur la paroi d'un (1) des deux raccords simples composant le raccord double, dans l'espace défini par la dépression précitée (44) de la paroi de la boîte à eau (2).

11. Dispositif selon l'une quelconque des revendications 9 ou 10, caractérisé en ce que chaque cloison de guidage est réalisée sous forme d'une nervure annulaire continue (41), dont la hauteur est relativement faible par rapport à la profondeur de la boîte à eau (2) alors que chaque ongle de guidage (3', 3") présente une configuration annulaire discontinue.

12. Dispositif selon la revendication 1, caractérisé en ce que ledit premier moyen de guidage est constitué par un doigt axial faisant saillie du raccord, tandis que ledit deuxième moyen de guidage est constitué par un logement axial faisant saillie radialement de la paroi de la boîte à eau vers un l'intérieur de celle-ci, ledit doigt étant destiné à s'enfiler dans ce logement.

## Patentansprüche

1. Vorrichtung zum Verbinden eines Wärmeaustauschers mit einem Rohrende, bei der das Rohrende (1), das in eine Öffnung (6) des Wasserkastens (2) des Wärmeaustauschers mündet, einerseits eine feste Verbindung mit einer biegsamen Röhre (11) aufweist und andererseits über eine elastische, leicht auseinandernehmbare Verbindung mit dem Wasserkasten (2) verbunden ist, wobei die Abdichtung zwischen dem Rohrende (1) und dem Wasserkasten (2) durch einen elastomeren Ring (28) sichergestellt ist, der zwischen den beiden radial zusammengedrückt ist, bei der ein erstes, axial vorspringendes Führungsmitel (3, 3', 3") vorhanden ist, das mit dem Rohrende (1) formschlüssig verbunden ist, und bei der ein zweites Führungsmittel (4, 4') formschlüssig mit der innenseitigen Oberfläche des Wasserkastens (2) verbunden ist, so daß es mit dem ersten Führungsmittel (3, 3', 3") zusammenwirkt, dadurch gekennzeichnet,

daß das erste Führungsmittel durch einen axial ausgerichteten, vorspringenden Keil (3) gebildet ist, während das zweite Führungsmittel durch ein Schott (4) gebildet ist, dermaßen daß der vorspringende Keil (3) darauf gleitet, wobei das Schott (4) einen Vorsprung einer ersten Seitenwand (5) des Wasserkastens (2) bildet, die gegenüber der Öffnung (6) angeordnet ist und mit einer zweiten Seitenwand (7) des Wasserkastens (2), die im wesentlichen parallel zu dem Schott (4) angeordnet ist, einen Raum (8) abgrenzt, in den der Führungskeil (3) eindringt und festgehalten wird, wenn das Rohrende (1) mit dem Wasserkasten (2) verbunden ist, daß der Keil (3) und das Schott (4) der Führung im transversalen Schnitt ein Profil von der Form eines Umfangbogens aufweisen und

daß die auseinandernehmbare Verbindung zwischen dem Rohrende (1) und dem Wasserkasten (2) durch eine Abriegelvorrichtung gebildet ist, die mindestens eine axial ausgerichtete und radial elastische Lasche (12, 21, 17) aufweist, die an ihrem freien Ende mit einem Verriegelungszahn (13, 22, 17) versehen ist, der zur Abriegelung mit einem Haltemittel (oder Anschlag, 14, 23) zusammenwirkt.

2. Vorrichtung nach Anspruch 1, dadurch gekennzeichnet, daß die Abriegelungsvorrichtung zwei Laschen (12) aufweist, die an der Außenseite der Vorrichtung zum Verbinden angeordnet sind und einstückig mit dem Rohrende (1) oder dem Wasserkasten (2) ausgebildet sind, während der Anschlag (14), mit dem jeder Verriegelungszahn (13) zusammenwirkt, entsprechend entweder auf dem Wasserkasten (2) oder auf dem Rohrende (1) angeordnet ist.

3. Vorrichtung nach Anspruch 1, dadurch gekennzeichnet, daß die zwei externen Laschen metallische Laschen sind, die angesetzt (15) sind oder abgeformt sind mit dem röhrenförmigen Anschluß (1) oder dem Wasserkasten (2).

4. Vorrichtung nach einem der Ansprüche 2 oder 3, dadurch gekennzeichnet, daß der Anschlag durch eine röhrenförmige Öse (14) gebildet ist, in die sich die korrespondierende Lasche (12, 15) einfügt, so daß der Verriegelungszahn (13, 17) gegen ein distales Ende der Öse (14) anschlägt.

5. Vorrichtung nach Anspruch 1, dadurch gekennzeichnet, daß die Abriegelvorrichtung (2) interne Laschen (21) aufweist, die an dem Führungskeil (3) des Rohrendes (1) so angeordnet sind, daß sie im Innern des Wasserkastens (2) mit zwei radialen, in der Seitenwand des Wasserkastens (2) angeordneten Anschlägen (23) mittels ihrer Zähne (22) einrasten.

6. Vorrichtung nach Anspruch 5, dadurch gekennzeichnet, daß die zwei internen Laschen einstückig mit dem Führungskeil (3) gebildet sind und daß auf der inneren Oberfläche der Öffnung des Wasserkastens axiale Eingangsnuten und Ausgangsnuten angeordnet sind.

7. Vorrichtung nach Anspruch 5, dadurch gekennzeichnet, daß die zwei internen Laschen Metallaschen sind, die angesetzt sind (21) und von einem metallischen, dünnen Halbring getragen werden, der um den Führungskeil (3) angeordnet ist und in einer Nut (27) des Führungskeils (3) eingesetzt ist.

8. Vorrichtung nach Anspruch 7, dadurch gekennzeichnet, daß die zweite Seitenwand (7) des Wasserkastens (2), die zusammen mit dem Führungsschott (4) den Raum (8) für den Führungskeil (3) begrenzt, mit den anschließenden Teilen, die sich bezüglich der Öffnung (6) des Wasserkastens auf der einen und der anderen Seite befinden, über Segmente der Seitenwand (43), die nach außen gebogen sind, verbunden ist.

9. Vorrichtung zum Verbinden eines Wärmeaustauschers mit einem Rohrende, bei der ein erstes und ein zweites Rohrende (1, 1') in eine erste und eine zweite Öffnung (Eingang, Ausgang ; 6a, 6b) eines Wasserkastens (2) des Wärmeaustauschers münden, die ein Schott (34) zur Trennung der beiden Öffnungen aufweist, wobei jedes Rohrende einerseits eine feste Verbindung mit einer biegsamen Röhre (11) aufweist und andererseits über eine elastische, leicht auseinandernehmbare Verbindung mit dem Wasserkasten (2) verbunden ist, dadurch gekennzeichnet, daß die beiden Öffnungen (6a und 6b) benachbart, beiderseits des Trennungsschotts angeordnet sind, in dem jedes Rohrende entsprechend dem Anspruch 1 ausgebildet ist und die beiden Rohrenden (1, 1') durch eine in Abformtechnik gebildete Verbindungsbrücke verbunden sind, wobei die zwei so zusammengefügten Anschlüsse einen doppelten Monoblockanschluß bilden.

10. Vorrichtung nach Anspruch 9, dadurch gekennzeichnet, daß das Trennungsschott (34) der beiden Öffnungen (6a und 6b) des Wasserkastens (2) niedriger ausgebildet ist als die Tiefe des Wasserkastens, wodurch sich ein Unterdruck (44) zwischen den beiden, mit den beiden Rohrenden (1, 1') korrespondierenden Öffnungen (6a und 6b) bildet, und daß die Abriegelvorrichtung eine einzige metallische Lasche (36) aufweist, deren befestigtes Ende (38) in eine Aussparung (39) der Verbindungsbrücke (33) eingesetzt ist, so daß der Verriegelungszahn (37), mit dem ihr freies Ende versehen ist, durch den Unterdruck (44) in den Raum, der durch die Seitenwand und den Wasserkasten (2) gebildet wird, gegen einen Anschlag (40) gedrückt wird, der auf der Seitenwand des einen, der beiden einfachen Rohrenden angeordnet ist, die den Doppelanschluß bilden.

11. Vorrichtung nach einem der Ansprüche 9 oder 10, dadurch gekennzeichnet, daß jedes Führungsschott durch eine zusammenhängende, ringförmige Rippe gebildet ist, deren Höhe in Bezug auf die Tiefe des Wasserkastens (2) gering ist, und daß der Führungskeil (3', 3") durch eine ringförmige, unzusammenhängende Anordnung gebildet ist.

12. Vorrichtung nach Anspruch 1, dadurch gekennzeichnet, daß das erste Führungsmittel durch einen vom Anschluß axial vorspringenden Finger gebildet ist, während das zweite Führungsmittel durch eine axiale Lagerung gebildet wird, die radial von der Seitenwand des Wasserkastens in Richtung des Inneren des Wasserkastens vorspringt, wobei der Finger so ausgebildet ist, daß er sich in die Lagerung einfügt.

## Claims

1. An assembly device for a heat exchanger/tubular connector assembly in which the tubular connector (1) discharging into an aperture (6) of a water tank (2) of the exchanger is attached on the one hand to a flexible pipe (11) via a fixed joint and on the other to the water tank (2) via an easily demountable flexible connection, sealing-tightness between the tubular connector (1) and the water tank (2) being ensured by an elastomer ring (28) radially compressed between them, a first axially projecting guide means (3, 3', 3") being rigid with the tubular connector (1), while a second guide means (4, 4') is rigid with the inner surface of the water tank (2) and has a configuration which allows it to cooperate with the first guide means, characterised in that :

— the said first guide means consists of an axially orientated projecting claw (3), while the second guide means consists of a partition (4) on which the projecting claw (3) is adapted to slide, the said projection (4) projecting from a first wall (5) of the water tank (2) opposite the aforesaid aperture (6) and defining with a second wall (7) of this tank, substantially parallel with the partition (4), a housing (8) into which the said guide claw (3) enters and is held captive, when the tubular connector is assembled together with the water tank (2) ;

— the claw and the guide partition have in cross-section a profile which is defined by an arc of the circumference ;

— the demountable connection between the tubular connector (1) and the water tank (2) is constituted by a locking device comprising at least one lug (12, 21, 15) which is axially orientated and radially elastic, the said lug being provided at its free end with an engaging tooth (13, 22, 17) adapted to cooperate for locking purposes with a stop means (or abutment 14, 23).

2. A device according to Claim 1, characterised in that the locking means comprises two lugs (12) disposed outside the assembly device and produced in a single piece with the tubular connector (1) or with the water tank (2), the abutment (14) with which each detent tooth (13) cooperates being disposed on the water tank (2) or on the tubular connector (1) respectively.

3. A device according to Claim 1, characterised in that the two outer lugs are metal lugs (15) connected to or moulded onto the tubular connector (1) or the water tank (2).

4. A device according to either of Claims 2 or 3, characterised in that the abutment is advantageously produced in the form of a tubular lug (15) into which fits the corresponding lug (12, 15) and against a distal end of which the detent tooth (13, 17) abuts.

5. A device according to Claim 1, characterised in that the locking device comprises two inner lugs (21) carried by the guide claw (3) on the tubular connector (1) and adapted to engage on the inside of the water tank (2) with two radial abutments (23) disposed in the wall thereof and via their teeth (22).

6. A device according to Claim 5, characterised in that the two inner lugs are made in a single piece with the guide claw (3) and in that axial inlet and outlet notches are provided on the inside surface of the opening of the water tank.

7. A device according to Claim 5, characterised in that the two inner lugs are connected metal lugs (21) carried by a thin metal half-ring (26) disposed around the guide claw (3) and housed in a groove (27) therein.

8. A device according to Claim 7, characterised in that the said second wall (7) of the water tank (2) which in conjunction with the guide partition (4) defines the housing (8) for the said guide claw (3) is connected to the adjacent parts which are situated on either side of the aperture (6) of the water tank (2) via outwardly inclined wall segments (43).

9. An assembly device for a heat exchanger/tubular connector assembly in which a first and a second tubular connectors (1, 1') discharge into a first and a second aperture (inlet, outlet 6a, 6b) of a water tank (2) of the exchanger comprising a partition (34) providing a separation between these two apertures, each connector being rigid on the one hand with a flexible pipe (11) through a fixed connection and on the other with the water tank through an easily demountable flexible connection, characterised in that the two apertures (6a, 6b) are close together while being disposed on either side of the separating partition, in that each tubular connector is produced in accordance with Claim 1 and in that the two tubular connectors (1, 1') are connected by a moulded connecting bridge (33), the two connectors thus twinned defining a monobloc double connector.

10. A device according to Claim 9, characterised in that the partition (34) separating the two apertures (6a, 6b) of the water tank (2) has a height which is less than the depth of the water tank, which defines a depression (22) between the two apertures (6a, 6b) corresponding to the two tubular connectors (1, 1') and in that the locking device comprises a single connected metal lug (36), of which the fixed end (38) is accommodated in a recess (39) in the connecting bridge (33) while the detent tooth (37) provided at its free end, when the double connector is assembled together with the water tank, comes to bear against an abutment (40) disposed on the wall of one (1) of the two single connectors of which the double connector is composed, in the spaced defined by the aforesaid depression (44) in the wall of the water tank (2).

11. A device according to either of Claims 9 or 10, characterised in that each guide partition is made in the form of a continuous annular rib (41) the height of which is relatively low in relation to the depth of the water tank (2) while each guide claw (3', 3") has an intermittent annular configuration.

12. A device according to Claim 9, characterised in that the said first guide means consists of an axial finger projecting from the connector, while the said second guide means consists of an axial housing projecting radially from the wall of the water tank towards an interior thereof, the said finger being adapted to fit into this housing.

FIG.1

FIG.2

FIG.3

FIG.5

FIG.4

FIG.7

FIG.6

## FIG. 10

## FIG. 9

## FIG. 11

## FIG. 8

EP 0 327 442 B1

FIG.13

FIG. 14

FIG.12

FIG.15